Europäisches Patentamt

European Patent Office

Office européen des brevets

(11) Veröffentlichungsnummer: **0 073 449**
**B1**

## EUROPÄISCHE PATENTSCHRIFT

(45) Veröffentlichungstag der Patentschrift: **25.04.90**

(21) Anmeldenummer: **82107717.9**

(22) Anmeldetag: **23.08.82**

(51) Int. Cl.⁵: **G 01 G 13/30**, G 01 F 23/28

(54) **Verfahren zum chargenweisen Verwiegen von Schüttgut und Vorrichtung zur Durchführung des Verfahrens.**

(30) Priorität: **26.08.81 CH 5491/81**

(43) Veröffentlichungstag der Anmeldung:
**09.03.83 Patentblatt 83/10**

(45) Bekanntmachung des Hinweises auf die Patenterteilung:
**25.04.90 Patentblatt 90/17**

(84) Benannte Vertragsstaaten:
**CH DE FR GB IT LI**

(56) Entgegenhaltungen:
**AT-B- 312 955**
**DE-A- 2 612 637**
**DE-B- 1 284 651**
**DE-B- 1 773 815**
**US-A- 3 085 168**

(73) Patentinhaber: **Gebrüder Bühler AG**
**CH-9240 Uzwil (CH)**

(72) Erfinder: **Naef, Peter**
**Rosenberg 1375 C**
**CH-9410 Heiden (CH)**

(74) Vertreter: **EGLI-EUROPEAN PATENT ATTORNEYS**
**Widenmayerstrasse 5**
**D-8000 München 22 (DE)**

## Beschreibung

Die Erfindung betrifft ein Verfahren zum chargenweisen Verwiegen von Schüttgut in einem Wägebehälter mittels einer elektronischen Durchlauf-Schütt-Waage, bei dem das jeweilige Ist-Gewicht einer Schüttgutfüllung im Wägebehälter gewogen, sodann die Schüttgutfüllung abgelassen und dies unter Aufsummierung der Ist-Gewichte bei aufeinanderfolgenden Behälterfüllungen laufend wiederholt wird.

Das oben angegebene gattungsgemäße Verfahren ist bereits aus der DE-A 2 612 637 (SAUTER) für das Schüttgut Beton bekannt. Bei dem bekannten Verfahren wird das Gewicht des Betons laufend während des Einfüllens über eine entsprechende Waage erfaßt und bei Erreichen eines vorgegebenen Grenzwertes über eine entsprechende Steuerung der Zulauf von Beton gestoppt.

Aus der AT-B-312 955 (VEREINIGTE...) ist es bekannt, laufend in einen Speicher gefördertes Produkt unterhalb dieses Speichers über einen Auslass in geeigneter Weise auf eine dort vorliegende Bandwaage abzugeben und das Produkt dann nach Verwägung auf ein weiteres Förderband weiterzuleiten. Im übrigen ist es aus der genannten Druckschrift bekannt, den "eigentlichen Füllstand" des Speichers mittels einer außerhalb des Speicher angeordneten Kraftmeßdose oder eine kapazitiven Meßsonde zu ermitteln.

In der Praxis unterscheidet man zwei Typen von Chargen-Waagen: die Dosierwaage wird eingesetzt, um mit entsprechend gesteuerter Dosiervorrichtung ein ganz genaues Gewicht, z.B. für das Abfüllen von 50 oder 100 kg Säcken, bereitzustellen. Beim zweiten Typ der Chargen-Waagen soll das genaue Gewicht einer großen Produktmenge ermittelt werden, wozu man Durchlauf-Schütt-Waagen verwendet. Letztere werden in neuerer Zeit durch elektronische Steuereinheiten derart angesteuert, daß der Waage ein vorgegebenes Sollgewicht von z.B. 60, 80 oder 120 kg vorgeschrieben wird. Ermittelt die Waage angenähert das vorgewählte Sollgewicht, wird sofort ein Schieber zwischen Speiseeinrichtung und Wägebehälter geschlossen, eine kurze Beruhigung des Wägebehälters abgewartet, sodann das genaue Ist-Gewicht im Wägebehälter ermittelt und hiernach das Schüttgut wieder abgelassen. Dies wird so lange wiederholt, bis die zu verwiegende Menge abgewogen ist. Der verbleibende Rest des Produktes weist ein kleineres Gewicht auf als das eingestellte Sollgewicht, so daß die Restverwiegung von Hand gesteuert werden muß. Die elektronische Steuereinheit ist derart mit dem Rechner verbunden, daß über einen Befehl am Eingabegerät sofort alle Ergebnisse jeder Charge bis zum Totalgewicht aufaddiert werden können. Der erhaltene Wert kann an die Buchhaltung weitergegeben oder aber über ihn mittels Ausdruck ein Beleg hergestellt werden.

Die Ist-Gewicht-Verwägung wird z.B. bei Annahmewaagen für Futtermühlen eingesetzt, um das genaue Gewicht der Rohmaterialposten zu bestimmen, die von Lastwagen angeliefert werden. Hierbei handelt es sich um sehr verschiedene Rohstoffe, unter denen die Getreidesorten einen Hauptanteil bilden. Das Schüttgewicht von Getreide z.B. variiert zwischen 0,5 und 0,8 kg/dm³. Kleie, die von Weißmühlen als Abfall bei der Herstellung von Backmehl anfällt, wird ebenfalls an Futtermühlen übergeben und weist ein Schüttgewicht im Bereich von 0,1 bis 0,3 kg/dm³ auf.

Bei der Ist-Gewicht-Verwägung würde nun bei Vorwahl eines Soll-Gewichtes der Waagebehälter im Falle eines spezifisch schweren Produktes nur halb so voll wie bei Befüllung mit einem spezifisch leichten Produkt. Um dies zu vermeiden, wird die Elektronik mit einem weiteren Wählschalter, einem Korrekturschalter für das Schüttgewicht, ausgerüstet. Mit letzterem kann die Bedienungsperson leicht dafür Sorge tragen, daß der Wägebehälter für jeden Wägezyklus einigermaßen aufgefüllt wird.

Zumindest bei den z.Zt. in der Praxis üblichen Systemen haben sich aber drei Nachteile gezeigt:
— Bei wenig geübtem Bedienungspersonal treten häufig Fehleingaben auf;
— bei Produkten, deren Schüttgewicht nicht von vornherein bekannt ist, muß das Soll-Gewicht auf die "sichere" Seite korrigiert werden, d.h. der Wägebehälter wird dann nur zu 2/3 oder 3/4 gefüllt, um mit Sicherheit eine Überfüllung zu vermeiden. Denn ein "Ausprobieren" bei einer ersten Verwägung eines neuen Produktes ist zu aufwendig und umständlich; die Annahmeleistung wird dabei häufig nicht erreicht, was zu Verzögerung und Wartezeiten bei der Abfertigung der Lieferfahrzeuge führt;
— eine volle Automatisierung der Istwert-Verwägung ist nicht möglich, solange die zu verwiegenden Schüttgüter ihrer Art nach nicht vorher bekannt sind.

Der Erfindung liegt die Aufgabe zugrunde, das eingangs genannte Verwägungs-Verfahren zu verbessern und insbesondere ein Verfahren zu schaffen, das die Nachteile der bekannten Ist-Gewicht-Verwägung weitestgehend behebt. Insbesondere soll dabei eine möglichst optimale Nutzung des ganzen Wägesystems bei gleichzeitiger Erhöhung seiner Betriebssicherheit ermöglicht werden, wobei Fehleingaben durch die Bedienungsperson ebenfalls ausgeschlossen sind.

Erfindungsgemäß wird diese Aufgabe bei einem Verfahren der eingangs genannten Art dadurch gelöst, daß das aufzusummierende Ist-Gewicht der Schüttgutfüllung jeder Einzelverwägung bei Erreichen eines vorgegebenen Schüttgut-Füllstandes im Wägebehälter nach Unterbrechung der Schüttgutzufuhr festgestellt wird.

Hierbei wird also erreicht, daß anstelle eines vorgegebenen Soll-Gewichtes ein vorgegebenes Soll-Volumen als Steuergröße für die Bestimmung des Ist-Gewichtes der Produktcharge gewählt wird.

Durch die erfindungsgemäß eingesetzte Volumensteuerung an der Ist-Gewichtswaage lassen sich mehrere Vorteile erzielen: zunächst muß das Schüttgewicht der einzelnen Produkte nicht mehr speziell erfaßt und ggf. korrigiert werden. Weiterhin ist das Wägesystem, einmal eingeschaltet, für jedes beliebige Produkt einsatzbereit, ohne daß irgendwelche zusätzlichen Handeingaben noch notwedig wären, wodurch erstmals wirklich die Ausgangslage für einen vollständig automatischen Verwägeablauf gegeben ist. Für das Wägesystem spielt es daher keine Rolle mehr, welche Produkte im einzelnen verwogen werden sollen. Wenn bisher immer eine Bedienungsperson bereitstehen mußte, um die noch notwendigen Steuerbefehle von Hand einzugeben, entfällt jetzt die manuelle parameter-Eingabe ebenso wie die dafür bisher vorgesehene Wählschaltung völlig. Das erfindungsgemäße Verwägesystem wird ohne menschliches Zutun für jeden Zyklus ziemlich optimal (sowohl zeitlich, als auch für die Leistung) ausgenutzt. In der Praxis hat sich ferner noch als weiterer Vorteil gezeigt, daß die bisher als lästig empfundene Staubzone zwischen dem variablen Füllniveau jetzt beseitigt ist. Für jede Verwägung wird stets etwa die gleiche Zone innerhalb des Wägebehälters ausgenutzt, so daß das System (einschließlich Produkt) sozusagen eine selbstreinigende Wirkung hat.

Dadurch, daß nicht mehr das Soll-Gewicht, sondern ein Soll-Volumen bzw. Soll-Niveau den Zyklus steuert, wird aber noch eine Anzahl weiterer vorteilhafter Ausgestaltungen der Erfindung möglich:

Sehr einfach läßt sich die Steuerung bewerkstelligen, wenn die Feststellung des Schüttgut-Füllstandes durch eine im Wägebehälter angeordnete Niveausonde vorgenommen wird und hiermit die Produktspeisung vorzugsweise so gesteuert wird, daß der Wägebehälter für jede Messung voll gefüllt wird und hiernach die Verwägung vorgenommen wird. Besonders zweckmäßig ist es ferner, wenn die Füllung des Wägebehälters unter Berücksichtigung des natürlichen Schüttwinkels des eingespeisten Produktes gesteuert wird, was letztlich zu optimalen Behälterfüllungen führt. Dies kann vorteilhafterweise z.B. dadurch erreicht werden, daß die Sonde in einigem Abstand von der Wandung, somit im oberen Bereich des Wägebehälters angeordnet wird, wobei von einem Durchschnittswert für den Schüttwinkel ausgegangen wird.

Körnige Güter neigen bei der Schüttung in einen Behälter dazu, ein im wesentlichen horizontales Niveau anzunehmen. Kleie hat demgegenüber einen verhältnismäßig steilen Schüttwinkel. Bei Einsatz der Erfindung ergeben sich auch hier nur noch sehr geringe Füllungsvariationen.

Steuerungsmäßig ist es besonders einfach, wenn die Unterbrechung der Schüttgutzufuhr direkt durch ein Signal der Niveausonde gesteuert wird. Sollen aber weitere Funktionen, z.B. Zeitverzögerungen usw., noch zusätzlich erfüllt werden, kann es von Vorteil sein, wenn das Signal durch die beim Steuergerät schon vorhandene Elektronik verwertet und dann zur Ansteuerung der Produktspeisung verwendet wird. Auch im zweiten Fall ist es aber nicht notwendig, daß die Gewichtsfunktion in irgendeiner Art zur Beeinflussung des Füllbereiches verwendet wird. Selbstverständlich kann die Mitverwertung eines Gewichtssignales, sofern ein entsprechender Bedarf vorhanden ist, in ganz besonderen Fällen doch genutzt werden.

Zweckmäßig ist es ferner, wenn während der Verwägung das Schüttgut in an sich bekannter Weise in einen Vorbehälter eingespeist wird.

Es gibt mehrere Möglichkeiten, die zwei Zyklen der Füllung sowie der Verwägung bzw. die Steuerung durch die Niveausonde einerseits sowie den eigentlichen Verwägevorgang andererseits aufeinander abzustimmen oder gegebenenfalls ineinander übergehen zu lassen.

Die steuerungsmäßig einfachste Lösung liegt darin, daß die Ist-Gewichtserfassung erst nach Vollsignal-Meldung der Niveausonde ausgelöst wird.

Eine weitere zweckmäßige Fortbildung des erfindungsgemäßen Verfahrens besteht darin, daß das Wägesystem während der Füllphase blockiert ist und z.B. erst durch Voll-Meldung durch die Niveausonde zugeschaltet wird. Bei großen Waagen und bei Systemen mit Vorbehältern kann auf diese Weise das hochempfindliche Wägesystem vor schlagartigen Belastungen verschont werden, wie dies gerade beim "Einfallen" der vorgespeicherten Masse an Schüttgut der Fall ist, besonders zu Beginn der Verwägung. Durch die genannten Maßnahmen kann sich ferner der Beruhigungspunkt des Wiegesystems schneller einstellen, weil die ersten Stöße des Produktes durch eine Blockierung abgefangen werden. Für die letzte Füllphase sind die Kräfte des noch zu speisenden Produktes gegenüber der Masse, die der fast gefüllte Wägebehälter darstellt, klein und bringen den Behälter kaum mehr zum Schwingen.

Die Erfindung bezieht sich ferner auf eine Durchlauf-Schütt-Waage zur Durchführung des erfindungsgemäßen Verfahrens, mit einem Wägebehälter, der eine Schüttgut-Zuleitung mit einer Einrichtung zu ihrem Absperrren aufweist, einem elektronisch steuerbaren Wägesystem mit Mitteln zum Erfassen des Ist-Gewichts einer Behälterfüllung und mit einer Einrichtung zum Aufsummieren der erfaßten Ist-Gewichte aufeinanderfolgender Behälterfüllungen.

Die ganze problematik, die hinsichtlich des Verfahrens aufgezeigt wurde, trifft hier in gleichem Maße zu. Auch ist die vorstehend genannte Durchlaufwaage von ihrer Gatttung her bereits aus der DE-A 2 612 637 (SAUTER) bekannt.

Die gattungsgemäße Durchlauf-Schütt-Waage konnte auf überraschend einfache Weise dadurch wesentlich verbessert werden, daß im Wägebehälter eine Niveausonde angeordnet ist, durch welche die Einrichtung zum Absperren der Schüttgut-Zuleitung steuerbar und die Mittel zum Erfassen des Ist-Gewichts der Behälterfüllung auslösbar sind.

Prinzipiell würde sich jedes Element, das ein genaues Niveau feststellen und daraus ein Steuersignal ableiten kann, für die erfindungsgemäße Steuerung der Behälterfüllung eignen. Vorzugsweise wird jedoch eine Stimmgabelsonde eingesetzt, da diese in einem genügend engen Bereich ein klares Schaltsignal erzeugen kann, wenig störempfindlich ist und auch eine gewisse selbstreinigende Wirkung aufweist. Die Stimmgabelsonde wird zu diesem Zweck von oben in den Schüttbehälter eingehängt, wobei die Befestigung am Schüttbehälter oder aber am festen Kastenaufbau um den Schüttbehälter erfolgen kann. Die optimale plazierung kann empirisch leicht und schnell gefunden werden, wenn die Art der zu verwiegenden Güter im wesentlichen bekannt ist.

Die Erfindung wird nachfolgend anhand der Zeichnung im Prinzip beispielshalber noch näher erläutert. Er zeigen

Fig. 1 das erfindungsgemäße Zusammenwirken einer Volumensteuerung mit einer Ist-Gewichts-Verwägung.

Fig. 2 eine Anwendung der Erfindung für die Annahmeverwägung bei einer Futtermühle.

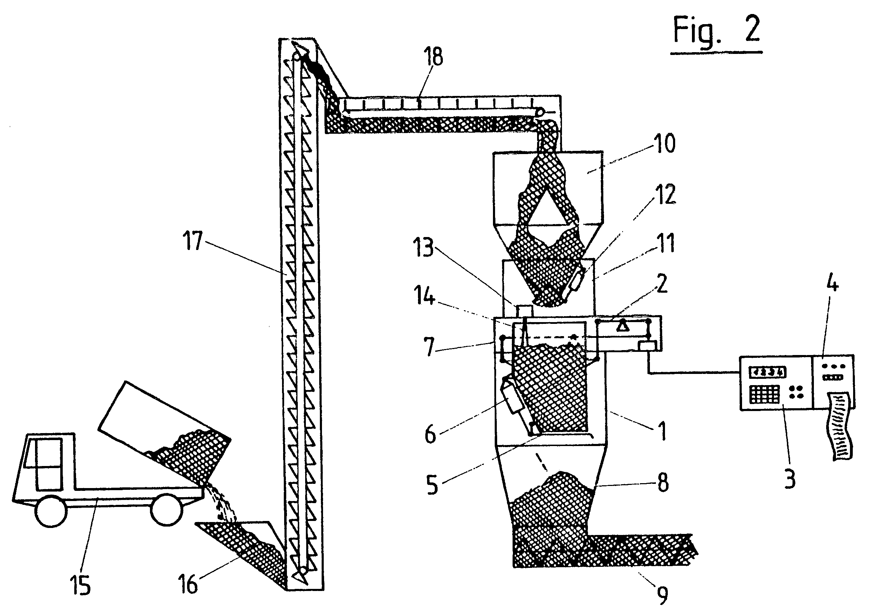

Zum leichteren Verständnis soll zunächst die Darstellung nach Fig. 2 betrachtet werden. Ein Wägebehälter 1 ist über eine Wägeeinrichtung 2 an ein Eingabe- bzw. Steuergerät 3 angeschlossen, das direkt einem Drucker 4 zuschaltbar ist. Der Wägebehälter 1 weist eine große Bodenklappe 5 auf, die über einen fernsteuerbaren Pneumatikzylinder 6 geöffnet und geschlossen werden kann. Der Wägebehälter 1 ist in einem staubdichten Waagenkasten 7 eingeschlossen, der seinerseits in seinem unteren Teil zu einem Auffangbehälter 8 vergrößert ist, wohinein der ganze Inhalt des Wägebehälters 1 abgelassen werden kann. Vom Auffangbehälter 8 führt ein Schneckenförderer 9 das Produkt z.B. in eine nicht dargestellte Silo-Anlage ab.

Der Wägebehälter 1 wird durch einen Speisebehälter 10 und einen Speiseschieber 11 mit Produkt gefüllt, wobei auch der Speiseschieber 11 durch einen Pneumatikzylinder 12 fernbedienbar ist. Eine Stimmgabelsonde 13 ist an dem Waagenkasten 7 befestigt und reicht mit ihrer Gabel 14 in den oberen Bereich des Wägebehälters 1 hinein.

Das Schüttgut, zum Beispiel Weizen, wird von einem Lastwagen 15 in eine Annahmegosse 16 gekippt, über einen Becherelevator 17 überhoben und einem Horizontalförderer 18 übergeben, der den Weizen direkt in den Speisebehälter 10 schüttet.

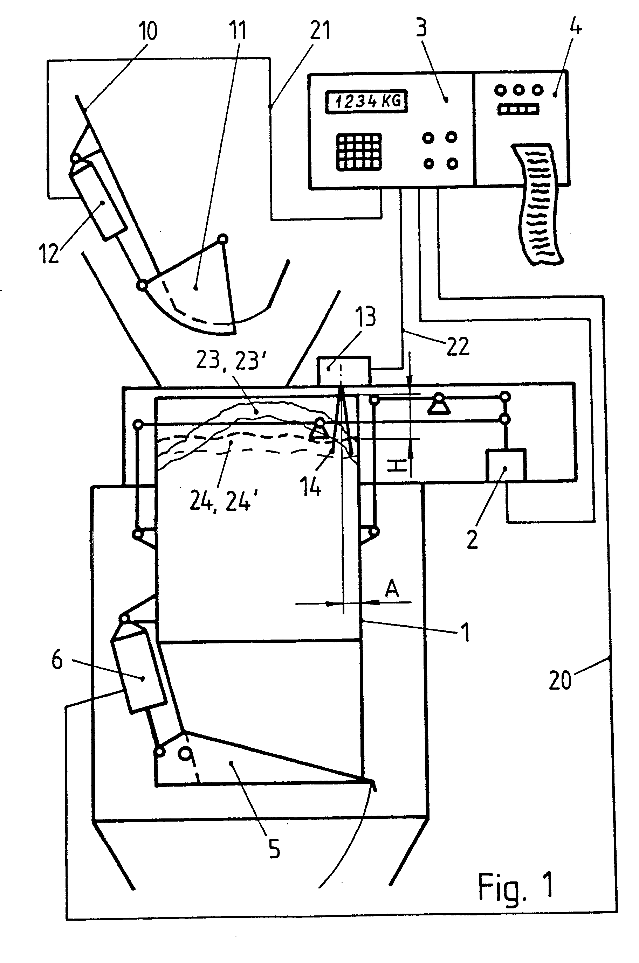

In Fig. 1 ist die Steuerung der Speiseeinrichtung bzw. der Füllung des Wägebehälters 1 und der Verwägung in größerem Maßstab dargestellt:

In der Bereitschaftstellung des ganzen Systems wird durch das Steuergerät 3 die Bodenklappe 5 über eine Steuerleitung 20 und den Pneumatikzylinder 6 geschlossen, der Speiseschieber 11 jedoch über eine Steuerleitung 21 und den Pneumatikzylinder 12 geöffnet. Produkt kann nun solange in den Wägebehälter 1 eingespeist werden, bis das Produktniveau von der Stimmgabel 14 festgestellt wird. Sobald das Niveau die Schaltzone der Stimmgabel 14 erreicht hat, wird ein Steuersignal über eine Steuerleitung 22 zum sofortigen Schließen des Speiseschiebers 11 abgegeben. Wie sich hieraus ohne weiteres ergibt, muß die Schließfunktion nicht mit der Genauigkeit einer eigentlichen Dosierung erfolgen, da das Ziel der Niveausteuerung eine Bereichssteuerung ist. Je nach Produkt wird sich dabei in dem Wägebehälter ein eigentlicher Schüttkegel etwa entsprechend den Linien 23, 23' (z.B. für Kleie) oder eine angenähert horizontale Niveaulinie wie 24 bzw. 24' (z.B. für Getreide) ausbilden. Durch Plazierung der Stimmgabel 14 im geeigneten Abstand "A" von der Seitenwand des Wägebehälters 1 sowie mit geeigneter Eintauchtiefe "H" von der Oberkante des Wägebehälters aus kann eine für das Gesamtsystem optimale Füllung vorgegeben werden.

Das Schließsignal der Stimmgabelsonde 13 an den Speiseschieber 11 wird nun im Steuergerät 3 gleichzeitig auch eingesetzt für das Auslösen bzw. den Ablauf des eigentlichen Wägevorganges. Über die Wägeeinrichtung 2 wird nun nach Beruhigung des Wägebehälters 1 eine ganz genaue Verwägung vorgenommen. Das genaue Gewicht wird im Steuergerät 3 gespeichert und über die Steuerleitung 20 die Öffnung der Bodenklappe 5 ausgelöst. Die Bodenklappe 5 kann sodann nach entsprechender zeitlicher Verzögerung wieder verschlossen werden, so daß der ganze Zyklus erneut von vorne beginnen kann.

Ist die gewünschte Produktmenge abgewogen, wird vom Steuergerät 3 eine Aufsummierung des Chargengewichtes auf die Summe der bisherigen Chargengewichte vorgenommen. Das Steuergerät 3 kann auch so ausgelegt werden, daß auf entsprechenden Steuerbefehl hin, der das Ende des zu verwiegenden Postens anzeigt, eine Restpostenverwiegung durchgeführt wird, was durch Überbrückung der Stimmgabelsonde 13 über Zeitverzögerung möglich ist.

Die Erfindung läßt sich stets dann einsetzen, wenn mittels einer elektronischen Durchlaufschüttwaage eine Ist-Gewichtsverwägung vorgenommen werden soll. Denn bei Einsatz einer mechanischen Schüttwaage ist weder die beschriebene Ist-Gewichtsverwägung, noch eine entsprechende Speicherung und Aufaddierung möglich. Bei mechanischen Waagen wird im automatischen Betrieb ein genau vorgegebenes Gewicht eingewogen und lediglich die Anzahl der Schüttungen gezählt.

**Patentansprüche**

1. Verfahren zum chargenweisen Verwiegen von Schüttgut in einem Wägebehälter (1) mittels einer elektronischen Durchlauf-Schütt-Waage, bei dem das jeweilige Ist-Gewicht einer Schüttgutfüllung im Wägebehälter (1) gewogen, sodann die Schüttgutfüllung abgelassen und dies unter Aufsummierung der Ist-Gewichte bei aufeinanderfolgenden Behälterfüllungen laufend wiederholt wird, dadurch gekennzeichnet, daß das aufzusummierende Ist-Gewicht der Schüttgutfüllung jeder Einzelverwägung bei Erreichen eines vorge-

EP 0 073 449 B1

gebenen Schüttgut-Füllstandes im Wägebehälter (1) nach Unterbrechung der Schüttgutzufuhr festgestellt wird.

2. Verfahren nach Anspruch 1, dadurch gekennzeichnet, daß die Feststellung des Schüttgut-Füllstandes durch eine im Wägebehälter (1) angeordnete Niveausonde (13, 14) vorgenommen wird.

3. Verfahren nach Anspruch 1 oder 2, dadurch gekennzeichnet, daß der Schüttgut-Füllstand einer vollständigen Füllung des Wägebehälters (1) entsprechend gewählt wird.

4. Verfahren nach einem der Ansprüche 1 bis 3, dadurch gekennzeichnet, daß der Schüttgut-Füllstand unter Berücksichtigung des natürlichen Schüttwinkels des eingespeisten Schüttgutes gewählt wird.

5. Verfahren nach einem der Ansprüche 1 bis 4, dadurch gekennzeichnet, daß die Unterbrechung der Schüttgutzufuhr durch ein Signal der Niveausonde (13, 14) vorgenommen wird.

6. Verfahren nach Anspruch 5, dadurch gekennzeichnet, daß während der Verwägung der Schüttgutfüllung die Schüttgutzufuhr in einen Vorbehälter (10) eingeleitet wird.

7. Verfahren nach einem der Ansprüche 2 bis 6, dadurch gekennzeichnet, daß das Ist-Gewicht der Schüttgutfüllung erst nach Abgabe einer Voll-Signal-Meldung der Niveausonde (13) festgestellt wird.

8. Verfahren nach einem der Ansprüche 2 bis 7, dadurch gekennzeichnet, daß das Wägesystem während der Füllphase blockiert ist und erst nach Abgabe einer Voll-Signal-Meldung durch die Niveausonde (13) zugeschaltet wird.

9. Durchlauf-Schütt-Waage zur Durchführung eines Verfahrens nach Anspruch 1, mit einem Wägebehälter (1), der eine Schüttgut-Zuleitung mit einer Einrichtung (11) zu ihrem Absperren aufweist, einem elektronisch steuerbaren Wägesystem mit Mitteln (2, 3, 4) zum Erfassen des Ist-Gewichts einer Behälterfüllung und mit einer Einrichtung (3) zum Aufsummieren der erfaßten Ist-Gewichte aufeinanderfolgender Behälterfüllungen, dadurch gekennzeichnet, daß im Wägebehälter (1) eine Niveausonde (13, 14) angeordnet ist, durch welche die Einrichtung (11) zum Absperren der Schüttgut-Zuleitung steuerbar und die Mittel (2, 3, 4) zum Erfassen des Ist-Gewichts der Behälterfüllung auslösbar sind.

10. Durchlauf-Schütt-Waage nach Anspruch 9, dadurch gekennzeichnet, daß die Niveausonde (13) als Stimmgabelsonde (14) ausgebildet ist.

11. Durchlauf-Schütt-Waage nach Anspruch 9 oder 10, dadurch gekennzeichnet, daß die Niveausonde (13, 14) im oberen Bereich des Wägebehälters (1) eingebaut ist.

## Revendications

1. Procédé de pesage de doses de matériaux en vrac dans une cuve de pesée (1) à l'aide d'une bascule électronique de pesage continu de matériau en vrac, selon lequel on pèse à chaque fois le poids effectif d'une charge de matériau en vrac présente dans la cuve de pesée (1), on vide alors cette charge de matériau en vrac et on répète ces opérations de manière continue pour les charges successives de la cuve tout en totalisant leurs poids effectifs, caractérisé en ce que c'est lorsqu'est obtenu un état préfixé de remplissage de la cuve de pesée (1) en matériau en vrac et après interruption de l'amenée de matériau en vrac qu'on détermine le poids effectif de la charge de matériau en vrac de chaque pesée individuelle qui doit être additionné.

2. Procédé suivant la revendication 1, caractérisé en ce que la détermination de l'état de remplissage en matériau en vrac s'effectue à l'aide d'une sonde de niveau (13, 14) disposée dans la cuve de pesée (1).

3. Procédé suivant la revendication 1 ou 2, caractérisé en ce que l'état de remplissage en matériau en vrac est sélectionné d'après un remplissage complet de la cuve de pesée (1).

4. Procédé suivant l'une des revendications 1 à 3, caractérisé en ce que l'état de remplissage en matériau en vrac est choisi en tenant compte de l'angle naturel de talus du matériau en vrac introduit.

5. Procédé suivant l'une des revendications 1 à 4, caractérisé en ce que l'interruption de l'amenée du matériau en vrac s'effectue à l'aide d'un signal de la sonde de niveau (13, 14).

6. Procédé suivant la revendication 5, caractérisé en ce que pendant la pesée du remplissage en matériau en vrac, l'apport de matériau en vrac est introduit dans une cuve de stockage préalable (10).

7. Procédé suivant l'une des revendications 2 à 6, caractérisé en ce que le poids effectif du remplisssge en mstériau en vrac n'est déterminé qu'après que l'émission complète d'un signal ait été délivrée par la sonde de niveau (13).

8. Procédé suivant l'une des revendications 2 à 7, caractérisé en ce que le système de pessge est bloqué pendant la phase de remplissage et n'est par exemple mis en fonctionnement qu'après que l'émission totale d'un signal ait été délivrée par la sonde de niveau (13).

9. Bascule de pesage continu de matériau en vrac pour la mise en oeuvre d'un procédé suivant la revendication 1, comprenant une cuve de pesée (1) qui comporte une amenée de matériau en vrac pourvue d'un mécanisme (11) permettant de l'interrompre, un système de pesage à commande électronique et comportant des moyens (2, 3, 4) permettsnt de déterminer le poids effectif d'un remplissage de cuve et un dispositif (3) permettant d'additionner les poids effectifs ainsi déterminés pour des remplissages successifs de la cuve, caractérisée en ce qu'il est prévu, disposée dans ls cuve de pesée (1), une sonde de niveau (13, 14) à l'aide de laquelle le mécanisme (11) permettant l'interruption de l'amenée de matériau en vrac peut être commandé et les moyens (2, 3, 4) permettant de déterminer le poids effectif du remplissage de cuve peuvent être mis en action.

10. Bascule de pesage continu de matériau en vrac suivant la revendication 9, caractérisée en ce que la sonde de niveau (13) est formée d'une sonde à diapason (14).

11. Bascule de pesage continu de matériau en vrac suivant la revendication 9 ou 10, caractérisée en ce que la sonde de niveau (13, 14) est montée dans la partie supérieure de la cuve de pesée (1).

**Claims**

1. Process for the batchwise weighing of bulk material in a weighing container (1) by means of an electronic continuous-flow bulk weigher, in which the respective actual weight of a bulk material filling in the weighing container (1) is weighed, then the bulk material filling is let out, and this is repeated continually with adding-up of the actual weights for successive container fillings, characterized in that the actual weight to be added up of the bulk material filling of each individual weighing is determined when a predetermined bulk material filling level in the weighing container (1) has been reached after the bulk material supply has been interrupted.

2. Process according to Claim 1, characterized in that the determination of the bulk material filling level is performed by a level sensor (13, 14) arranged in the weighing container (1).

3. Process according to Claim 1 or 2, characterized in that the bulk material filling level is chosen to correspond to a complete filling of the weighing container (1).

4. Process according to one of Claims 1 to 3, characterized in that the bulk material filling level is chosen with consideration given to the natural pouring angle of the bulk material fed in.

5. Process according to one of Claims 1 to 4, characterized in that the interruption in the bulk material supply is performed by a signal of the level sensor (13, 14).

6. Process according to Claim 5, characterized in that, during the weighing of the bulk material filling, the bulk material supply is started into a pre-container (10).

7. Process according to one of Claims 2 to 6, characterized in that the actual weight of the bulk material filling is not determined until after emission of a full-signal indication of the level sensor (13).

8. Process according to one of Claims 2 to 7, characterized in that the weighing system is blocked during the filling phase and is not switched in until after emission of a full-signal indication by the level sensor (13).

9. Continuous-flow bulk weigher for the implementation of a process according to Claim 1, with a weighing container (1), which has a bulk material feed pipe with a device (11) for its shutting off, an electronically controllable weighing system with means (2, 3, 4) for detecting the actual weight of a container filling and with a device (3) for adding up the detected actual weights of successive container fillings, characterized in that there is arranged in the weighing container (1) a level sensor (13, 14), by which the device (11) for shutting off the bulk material feed pipe can be controlled and the means (2, 3, 4) for detecting the actual weight of the container filling can be activated.

10. Continuous-flow bulk weigher according to Claim 9, characterized in that the level sensor (13) is designed as a tuning-fork sensor (14).

11. Continuous-flow bulk weigher according to Claim 9 or 10, characterized in that the level sensor (13, 14) is fitted in the upper region of the weighing container (1).

Fig. 1

Fig. 2

EP 0 073 449 B1